# FASCICULE DE BREVET EUROPEEN

(11) **EP 2 528 806 B1**
(45) Date de publication et mention de la délivrance du brevet: **02.04.2014**
(21) Numéro de dépôt: 11705943.6
(22) Date de dépôt: 28.01.2011
(51) Int. Cl.: B63B 9/06, E02B 17/02, F03D 11/04, E02B 17/00

(54) **SUPPORT FLOTTANT POUR STRUCTURE OFF-SHORE TELLE QUE NOTAMMENT UNE EOLIENNE**
SCHWIMMENDER TRÄGER FÜR EINE OFFSHORE-STRUKTUR, INSBESONDERE EINEN WINDGENERATOR
FLOATING SUPPORT FOR OFFSHORE STRUCTURE SUCH AS A WIND GENERATOR IN PARTICULAR

(30) Priorité: 29.01.2010 FR 1050634
(43) Date de publication de la demande: 05.12.2012
(73) Titulaire: DCNS, 75015 Paris (FR)
(72) Inventeur: THIEFFRY, Philippe, F-56260 Larmor Plage (FR)
(74) Mandataire: Blot, Philippe Robert Emile
(86) Numéro de dépôt international: PCT/FR2011/050179
(87) Numéro de publication internationale: WO 2011/092437

(56) Documents cités:
- WO-A2-2010/021655
- DE-A1- 10 101 405
- DE-A1-102007 006 011
- DE-U1- 20 100 588
- US-A1- 2003 168 864

## Description

La présente invention concerne un support flottant pour une structure off-shore telle que notamment une éolienne.

Plus particulièrement, l'invention se rapporte à un tel support flottant qui comporte des moyens en forme de mât de support dont la partie supérieure est associée à la structure comme par exemple à une nacelle d'une éolienne et dont la partie inférieure est associée à des moyens en forme de flotteur et à des moyens formant lest, les moyens en forme de flotteur pouvant également être associés à des moyens de ballastage.

On connaît déjà dans l'état de la technique, une grande variété de supports flottants de ce type.

Ainsi par exemple un support flottant comportant des flotteurs allongés d'axes parallèles à l'axe des moyens en forme de mât de support et disposés régulièrement autour de ceux-ci, est déjà connu.

Ce support flottant est alors mis à l'eau en position verticale après assemblage, déballasté et partiellement lesté. La nacelle est ensuite assemblée sur l'extrémité correspondante des moyens en forme de mât à l'aide d'une grue et un complément de lest est ajouté à flot dans une zone où la profondeur le permet.

Le support flottant est alors remorqué sur site d'exploitation en position verticale.

D'autres supports flottants présentant des structures différentes sont également connus mais leur installation sur site se fait de façon relativement proche de celle décrite précédemment.

On conçoit alors que ces différents supports flottants présentent un certain nombre d'inconvénients notamment de leur assemblage, de la manipulation et en particulier de leur transport sur site d'exploitation.

En effet, ces différents supports flottants doivent être assemblés et remorqués en position verticale.

L'assemblage notamment de la nacelle à l'extrémité du mât nécessite alors l'utilisation de moyens de levage extrêmement importants et difficiles à mettre en oeuvre sur site.

Les documents DE 20100588 U1 et WO 2010/021655 décrivent un support flottant conforme au préambule de la revendication 1 et illustrent les problèmes mentionnés précédemment de transport et de mise en place.

Le but de l'invention est donc de résoudre ces problèmes.

A cet effet, l'invention a pour objet un support flottant pour structure off-shore telle que notamment une éolienne, du type comportant des moyens en forme de mât de support dont la partie supérieure est associée à la structure et dont la partie inférieure est associée à des moyens en forme de flotteur et à des moyens formant lest, caractérisée en ce que les moyens en forme de flotteur comprennent au moins trois flotteurs allongés disposés régulièrement autour des moyens en forme de mât et inclinés par rapport aux moyens en forme de mât d'un angle compris entre 15° et 45° de manière à présenter une forme générale évasée à partir de la partie-inférieure des moyens en forme de mât, et à définir deux positions stables du support, l'une couchée et l'autre dressée sur les moyens en forme de flotteur.

Selon d'autres aspects de l'invention, le support flottant comprend l'une ou plusieurs des caractéristiques suivantes :
- les moyens en forme de flotteur comprennent des moyens de ballastage permettant de déplacer le support entre ses deux positions stables,
- les extrémités inférieures des différents flotteurs allongés sont reliées aux moyens formant lest à l'extrémité inférieure des moyens en forme de mât,
- les extrémités supérieures des différents flotteurs allongés sont reliées entre elles et aux moyens en forme de mât par des poutres de liaison, et
- les flotteurs latéraux sont inclinés d'un angle égal à environ 30°.

L'invention sera mieux comprise à l'aide de la description qui va suivre donnée uniquement à titre d'exemple et faite en se référant aux dessins annexés, sur lesquels :
- la figure 1 représente une vue en perspective d'une structure off-shore telle que notamment une éolienne, de l'état de la technique, et
- les figures 2 et 3 représentent des vues en perspective d'une structure off-shore telle que notamment une éolienne, selon l'invention, respectivement en position couchée et dressée.

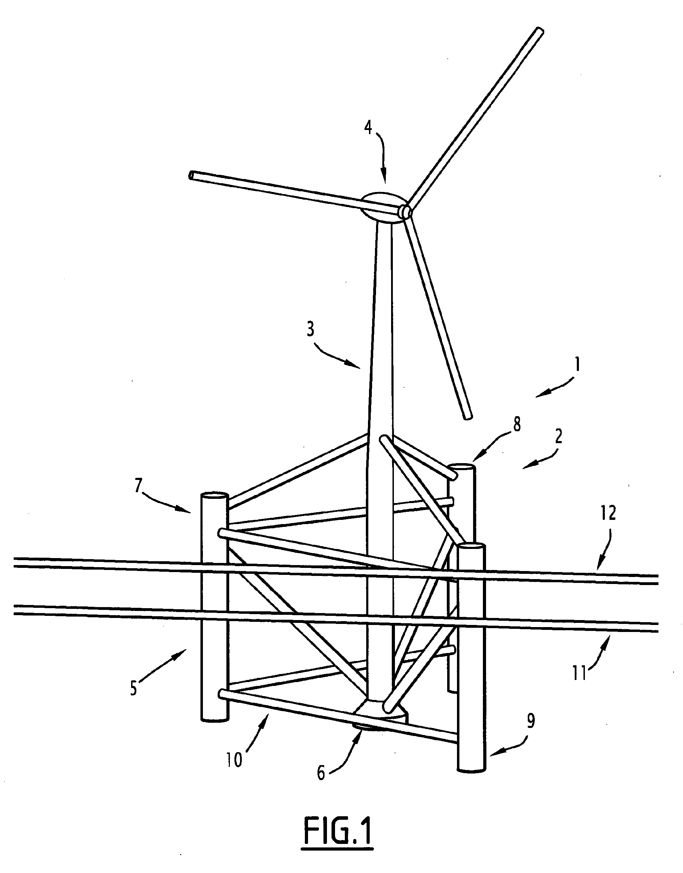

On a en effet illustré sur la figure 1, un support flottant pour une structure off-shore telle que notamment une éolienne.

Cette structure est désignée par la référence générale 1 sur cette figure et le support flottant est désigné par la référence générale 2.

Ce support comporte de façon classique des moyens en forme de mât de support désignés par la référence générale 3, dont la partie supérieure est associée à la structure telle que par exemple une nacelle d'éolienne, désignée par la référence générale 4, et dont la partie inférieure est associée à des moyens en forme de flotteur, désignés par la référence générale 5, et à des moyens formant lest désignés par la référence générale 6.

Dans l'exemple de réalisation décrit sur cette figure 1, les moyens formant lest 6 sont par exemple prévus à l'extrémité inférieure des moyens en forme de mât 3 et les moyens en forme de flotteur comportent par exemple trois flotteurs allongés, par exemple cylindriques, désignés respectivement par les références générales 7, 8 et 9, associés à des moyens de ballastage.

Ces flotteurs 7, 8 et 9 sont reliés entre eux et aux moyens en forme de mât 3 par des poutres de liaison dont l'une est par exemple désignée par la référence générale 10 sur cette figure 1.

Les lignes désignées par les références respectivement 11 et 12, désignent la ligne de flottaison en mode déballasté 11 par exemple pour le transit de la structure et la ligne de flottaison normale 12.

Comme cela a été indiqué précédemment, une telle structure présente un certain nombre d'inconvénients notamment au niveau de son assemblage et son transport.

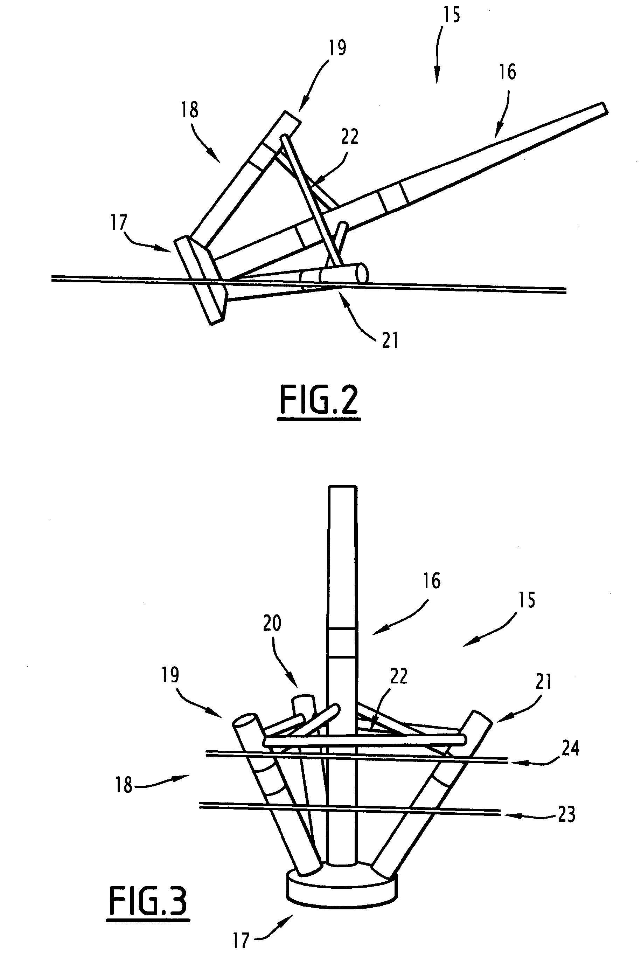

Pour résoudre ces problèmes, et comme cela est illustré sur les figures 2 et 3, dans le support flottant selon l'invention, les moyens en forme de flotteur présentent une forme générale évasée à partir de la partie inférieure des moyens en forme de mât, permettant de définir deux positions stables de ce support, l'une couchée sur les moyens en forme de flotteur illustrée sur la figure 2 par exemple pour son assemblage et son transport et l'autre dressée illustrée sur la figure 3 par exemple sur site d'exploitation.

On reconnaît en effet sur ces figures 2 et 3, un support flottant pour structure of-shore telle que notamment une éolienne, qui est désigné par la référence générale 15 sur ces figures.

De façon classique, ce support flottant comporte des moyens en forme de mât désignés par la référence générale 16 sur ces figures, dont l'extrémité supérieure est associée à la structure à supporter telle que par exemple la nacelle d'éolienne et dont l'extrémité inférieure est associée à des moyens formant lest désignés par exemple par la référence générale 17 et à des moyens en forme de flotteur désignés par la référence générale 18.

De façon classique, ces moyens en forme de flotteur sont également associés à des moyens de ballastage.

Selon l'invention, les moyens en forme de flotteur présentent alors une forme générale évasée à partir de la partie inférieure des moyens en forme de mât 16 pour permettre de définir deux positions stables de ce support, l'une couchée sur les moyens en forme de flotteur, telle qu'illustrée sur la figure 2 permettant l'assemblage et le transport du support flottant et l'autre dressée en position d'utilisation, telle qu'illustrée sur la figure 3.

Les moyens de ballastage permettent alors de faire passer le support flottant selon l'invention de l'une de ces positions vers l'autre.

Comme cela est également illustré sur ces figures, les moyens en forme de flotteur comportent par exemple plusieurs flotteurs allongés, comme par exemple trois flotteurs désignés par les références générales 19, 20 et 21, régulièrement répartis autour des moyens en forme de mât 16, ces flotteurs 19, 20, 21 présentant une forme par exemple cylindrique.

Les extrémités inférieures de ces différents flotteurs sont alors associées aux moyens en forme de lest 17 par exemple, tandis que leurs extrémités supérieures sont reliées d'une part entre elles et d'autre part, aux moyens en forme de mât 16, par des poutres de liaison telles que celle désignée par la référence générale 22 sur ces figures.

Ce support flottant présente alors un certain nombre d'avantages dans la mesure où il peut être assemblé et transporté en position dite couchée sur ses flotteurs.

Dans cette position couchée, le support flottant présente un faible tirant d'eau et les moyens en forme de mât 16 sont alors inclinés par rapport à la surface de l'eau, l'extrémité supérieure de ces moyens en forme de mât étant alors suffisamment éloignée de la surface de l'eau pour éviter tout risque de mouille de la nacelle de l'éolienne qui peut alors être assemblée directement à l'extrémité des moyens en forme de mât lors de la fabrication du flotteur par exemple en bassin, ce qui permet de limiter l'utilisation de grues.

L'inclinaison des flotteurs latéraux par rapport aux moyens en forme de mât peut être comprise entre 15° et 45° et de préférence égale environ à 30° et permet d'avoir une inertie de flottaison évolutive en fonction du tirant d'eau et donc du taux de remplissage des moyens de ballastage.

De cette manière et en considérant l'état initial suivant, support flottant à la verticale, ballasts remplis à 100 % puis en vidant progressivement ces ballasts, le tirant d'eau du support flottant diminue de même que l'inertie de flottaison.

On arrive ainsi à une position instable dont la conséquence est une inclinaison du support flottant jusqu'à la position couchée.

Il est à noter que cette position couchée est très stable et que les passages de la position couchée à la position dressée verticale par remplissage des ballasts, est parfaitement maîtrisable.

Les lignes respectivement 23 et 24 représentées sur la figure 3 représentent les lignes de flottaison en mode déballasté vertical et de flottaison normale.

Il ressort de ce qui précède que ce support flottant présente un certain nombre d'avantages par rapport aux solutions antérieures et en particulier la suppression de toute opération de montage sur site d'exploitation, ce qui se traduit par des gains très importants sur les coûts des moyens industriels à mettre en oeuvre et une plus grande indépendance vis-à-vis de la disponibilité de moyens spécifiques tels que des grues et des conditions météorologiques.

La structure peut alors être assemblée en bassin sans nécessiter de moyens de levage particuliers.

Une telle structure peut également être installée par des fonds inférieurs à ceux nécessaires aux flotteurs de l'état de la technique, tout en présentant une stabilité intrinsèque supérieure durant des opérations de remorquage.

Le support flottant selon l'invention présente également une structure plus simple et plus rigide que celles des flotteurs de l'état de la technique et une stabilité meilleure pour un poids inférieur.

Un tel support offre également un meilleur amortissement notamment en pilonnement.

Il va de soi bien entendu que d'autres modes de réalisation et d'autres applications encore peuvent être envisagés.

## Revendications

1. Support flottant pour structure off-shore telle que notamment une éolienne, du type comportant des moyens en forme de mât de support (16) dont la partie supérieure est associée à la structure et dont la partie inférieure est associée à des moyens en forme de flotteur (18) et à des moyens formant lest (17), **caractérisée en ce que** les moyens en forme de flotteur (18) comprennent au moins trois flotteurs allongés (19, 20, 21) disposés régulièrement autour des moyens en forme de mât (16) et inclinés par rapport aux moyens en forme de mât (16) d'un angle compris entre 15° et 45° de manière à présenter une forme générale évasée à partir de la partie inférieure des moyens en forme de mât (16), et à définir deux positions stables du support, l'une couchée et l'autre dressée sur les moyens en forme de flotteur (18).

2. Support flottant selon la revendication 1, **caractérisée en ce que** les moyens en forme de flotteur (18) comprennent des moyens de ballastage permettant de déplacer le support entre ses deux positions stables.

3. Support flottant selon la revendication 1 ou 2, **caractérisée en ce que** les extrémités inférieures des différents flotteurs allongés sont reliées aux moyens formant lest (17) à l'extrémité inférieure des moyens en forme de mât (16).

4. Support flottant selon la revendication 3, **caractérisée en ce que** les extrémités supérieures des différents flotteurs allongés sont reliées entre elles et aux moyens en forme de mât par des poutres de liaison (22).

5. Support flottant selon l'une quelconque des revendications précédentes, **caractérisé en ce que** les flotteurs latéraux (19, 20, 21) sont inclinés d'un angle égal à environ 30°.

## Patentansprüche

1. Schwimmender Träger für eine Offshore-Struktur, insbesondere ein Windgenerator von der Bauart mit Mitteln in Form eines tragenden Masts (16), dessen oberer Teil der Struktur und dessen unterer Teil Mitteln in Schwimmerform (18) und ballastbildenden Mitteln (17) zugewiesen ist, **dadurch gekennzeichnet, dass** die Mittel in Schwimmerform (18) mindestens drei längliche Schwimmer (19, 20, 21) umfassen, die gleichmäßig um die Mittel in Mastform (16) angeordnet sind und im Verhältnis zu den Mitteln in Mastform (16) um einen Winkel zwischen 15° und 45° derart geneigt sind, dass sie ab dem unteren Teil der Mittel in Mastform (16) eine sich nach oben ausbreitende Allgemeinform aufweisen und zwei stabile Positionen des Trägers, eine liegeposition und eine auf die Mittel in Schwimmerform (18) aufgerichtete Position, definieren.

2. Schwimmender Träger nach Anspruch 1, **dadurch gekennzeichnet, dass** die Mittel in Schwimmerform (18) Ballastmittel umfassen, die eine Verlagerung des Trägers zwischen seinen zwei stabilen Positionen ermöglicht.

3. Schwimmender Träger nach Anspruch 1 oder 2, **dadurch gekennzeichnet, dass** die unteren Enden der jeweiligen länglichen Schwimmer mit den ballastbildenden Mitteln (17) am unteren Ende der Mittel in Mastform (16) verbunden sind.

4. Schwimmender Träger nach Anspruch 3, **dadurch gekennzeichnet, dass** die oberen Enden der jeweiligen länglichen Schwimmer miteinander und mit den Mitteln in Mastform mittels Verbindungsbalken (22) verbunden sind.

5. Schwimmender Träger nach einem der vorangehenden Ansprüche, **dadurch gekennzeichnet, dass** die seitlichen Schwimmer (19, 20, 21) um einen Winkel gleich zirka 30° geneigt sind.

## Claims

1. A floating support for an offshore structure such as a wind generator in particular, of the type comprising means in the form of a support mast (16), the upper part of which is associated with the structure and the lower part of which is associated with means in the form of a float (18) and with ballast-forming means (17), **characterized in that** the means in the form of a float include at least three elongate floats (19, 20, 21) regularly positioned around the means in the form of a mast (16) and inclined relative to the means in the form of a mast (16) by an angle comprised between 15° and 45° so as to have an overall shape which widens out from the lower part of the means in the form of a mast (16), allowing two stable positions of the support to be defined, one of the positions being a lying-down position and the other a position standing up on the means in the form of a float (18).

2. The floating support according to claim 1, **characterized in that** the means in the form of a float (18) include ballast means making it possible to move the support between its two stable positions.

3. The floating support according to claim 1 or 2, **characterized in that** the lower ends of the various elongate floats are connected to the ballast means (17) at the lower end of the means in the form of a mast (16).

4. The floating support according to claim 3, **characterized in that** the upper ends of the various elongate floats are connected to one another and to the means in the form of a mast by connecting beams (22).

5. The floating support according to claim 7, **characterized in that** the side floats (19, 20, 21) are inclined by an angle approximately equal to 30°.
